**Europäisches Patentamt**

**European Patent Office**

**Office européen des brevets**

(19)

(11) Veröffentlichungsnummer: **0 124 529**
**B1**

# EUROPÄISCHE PATENTSCHRIFT

(12)

(45) Veröffentlichungstag der Patentschrift:
**02.04.86**

(21) Anmeldenummer: **83901796.9**

(22) Anmeldetag: **08.06.83**

(86) Internationale Anmeldenummer:
**PCT/AT 83/00017**

(87) Internationale Veröffentlichungsnummer:
**WO 83/04397 (22.12.83 Gazette 83/29)**

(51) Int. Cl.⁴: **B 60 B 39/10, B 60 B 39/04**

(54) **SANDSTREUEINRICHTUNG FÜR KRAFTFAHRZEUGE.**

(30) Priorität: **11.06.82 AT 2267/82**

(43) Veröffentlichungstag der Anmeldung:
**14.11.84 Patentblatt 84/46**

(45) Bekanntmachung des Hinweises auf die Patenterteilung:
**02.04.86 Patentblatt 86/14**

(84) Benannte Vertragsstaaten:
**BE CH DE FR GB LI LU NL SE**

(56) Entgegenhaltungen:
**EP - A - 0 025 203**
**DE - C - 136 567**
**DE - C - 556 220**
**US - A - 1 480 393**
**US - A - 1 560 256**
**US - A - 2 487 157**

(73) Patentinhaber: **CERVINKA, Franz, Oberleitenweg 35,
A-6370 Kitzbühel (AT)**

(72) Erfinder: **CERVINKA, Franz, Oberleitenweg 35,
A-6370 Kitzbühel (AT)**

(74) Vertreter: **Hofinger, Engelbert et al, Torggler-Hofinger
Wilhelm-Greil-Strasse 16, A-6020 Innsbruck (AT)**

## Beschreibung

Die Erfindung bezieht sich auf eine Einrichtung für Kraftfahrzeuge zum Streuen von Sand, mit mindestens einem nachfüllbaren Sandbehälter, von dem ein Streukanal in den Bereich vor das Fahrzeugrad führt und dort in einer Streudüse endet, und mit einer elektrischen Heizeinrichtung im Bereich der Streudüse.

Sandstreueinrichtungen sind sowohl für Schienen- als auch für Kraftfahrzeuge bekannt und dienen zur Erhöhung der Reibung zwischen dem Rad und der Schiene bzw. der Fahrbahn. Die Heizeinrichtungen dienen dabei dazu, um ein Gefrieren des Sandes in der kalten Jahreszeit zu vermeiden. Sandstreueinrichtungen für Schienenfahrzeuge zeigen die DE-A-1530025, die US-A-1204665 und die US-A-1292353, bei denen die Beheizung eines Abschnittes des Streukanals elektrisch oder mittels heissen Abgasen bzw. Dampf erfolgt. Sandstreueinrichtungen an Schienenfahrzeugen können jedoch nur bedingt mit solchen an Kraftfahrzeugen verglichen werden, da sie jederzeit für Notbremszwecke verfügbare Einrichtungen sein müssen. Im Gegensatz dazu sind Sandstreueinrichtungen an Kraftfahrzeugen für den ausschliesslichen Gebrauch in der kalten Jahreszeit bestimmt, und deren Streukanäle bzw. Streudüsen sind im besonderen Masse Spritzwasser ausgesetzt. Sie werden einerseits seltener benötigt, es treten jedoch andererseits gerade dann besonders ungünstige Bedingungen auf. So ist beispielsweise eine Einrichtung der eingangs genannten Art für Kraftfahrzeuge aus der EP-A-0025203 bekannt. Dort wird Pressluft im Fahrzeug vorausgesetzt, mit deren Hilfe das Streugut durch den zumindest im Endabschnitt beheizten Streukanal vor das Fahrzeugrad befördert. Es genügt aber bei Kraftfahrzeugen nicht – trotz der Anwendung von Pressluft – nur einen kurzen mündungsnahen Abschnitt des Streukanals zu beheizen, da das eindringende Spritzwasser eine Vereisung des Streukanals in jedem Abschnitt seiner gesamten Länge verursachen kann.

Für den somit notwendigen Spritzschutz ist die Anordnung und Ausbildung von Klappen, Schiebern od. dgl. am Ende eines Streukanals bei Kraftfahrzeugen bekannt, siehe DE-A-2400378, US-A-1818815 und AT-B-176454 und AT-B-349328. Die Anordnung bzw. Ausbildung von Klappen bewirkt selbstverständlich einen guten Spritzschutz des Streukanals und der Streudüse, jedoch verlagert sich das Problem der Vereisung nur vom Streukanal zur Verschlussklappe, deren einwandfreie Betätigbarkeit jederzeit gewährleistet sein muss.

Die Erfindung hat es sich nun zur Aufgabe gestellt, eine Sandstreueinrichtung für Kraftfahrzeuge der eingangs genannten Art so auszubilden, dass deren störungsfreie Funktion in jeder Witterungslage gesichert ist.

Erfindungsgemäss wird dies nun dadurch erreicht, dass die Heizeinrichtung in einer die Streudüse von unten verschliessenden Klappe angeordnet ist. Durch die erfindungsgemässe Lösung wird nun nicht nur der Streukanal geschützt und abgedeckt, sondern auch die Betätigbarkeit der Klappe gewährleistet, da diese auf Grund der Heizung nicht an der Streudüse festfrieren und damit jederzeit geöffnet werden kann. Als Energiequelle dient insbesondere die Fahrzeugbatterie. Die Anordnung der Heizeinrichtung in der Klappe erbringt einen besonders günstigen Wirkungsgrad, da die nicht nach aussen in die Umgebung, sondern in die Wandung der Streudüse bzw. des Streukanals abfliessende Wärmemenge zwangsläufig in ihrem gesamten Ausmass den einfriergefährdeten Anlagebereich durchdringen muss. Bei einer Beheizung des Streukanalendes entsprechend dem Stand der Technik würde sich die zur Verfügung stehende Wärmemenge in zwei Teilmengen aufteilen, von denen jene, die in der Wandung des Streukanals an der der Klappe entgegengesetzten Seite abfliesst, natürlich nicht der Erwärmung der Klappe dienen kann. Die Sandstreueinrichtung kann auch abnehmbar, beispielsweise an der Stossstange des Kraftfahrzeuges fixierbar sein, wobei eine Steckdose im Bereich der Stossstange vorgesehen wird. Die Heizung wird mittels eines Schalters am Armaturenbrett des Fahrzeuges eingeschaltet.

In einer bevorzugten Ausführung ist vorgesehen, dass die Klappe im Anlagebereich an die Streudüse mit einer Dichtung versehen ist, in die ein Heizdraht der Heizeinrichtung eingebettet ist.

Nachstehend wird nun die Erfindung anhand der Figuren der beiliegenden Zeichnungen näher beschrieben, ohne darauf beschränkt zu sein.

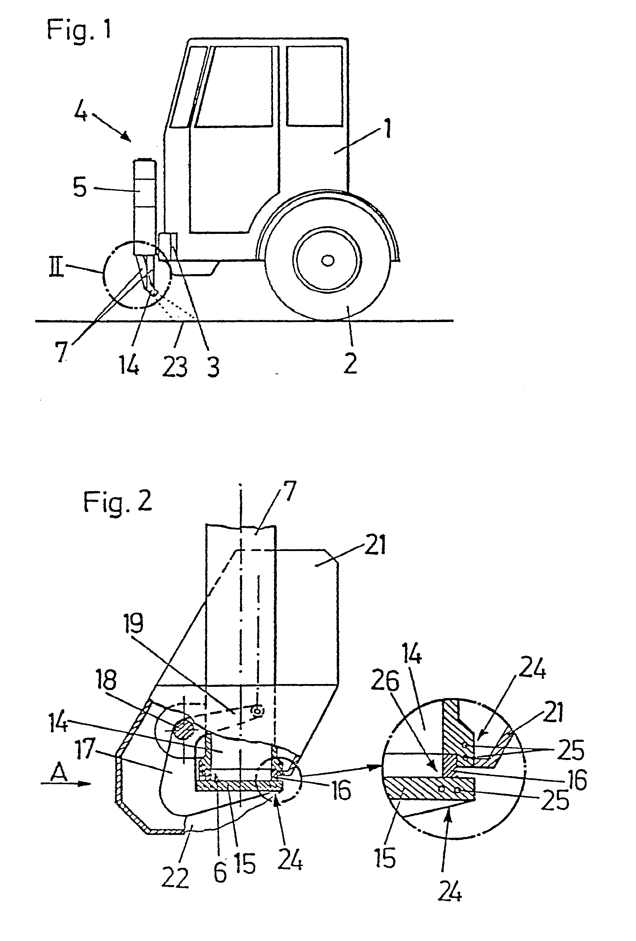

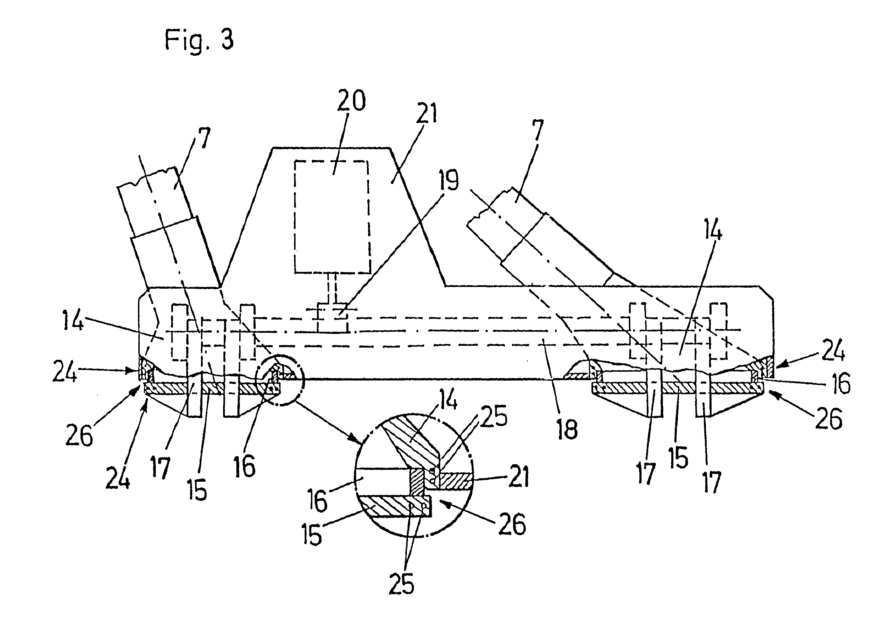

Fig. 1 zeigt eine Seitenansicht eines Lastkraftfahrzeugführerhauses mit einer erfindungsgemässen Sandstreueinrichtung, Fig. 2 vergrössert im Teilschnitt den Bereich II der Fig. 1, und Fig. 3 eine Ansicht in Richtung des Pfeiles A von Fig. 2 einer Sandstreueinrichtung für Zwillingsräder.

Das in Fig. 1 schematisch dargestellte Fahrzeug 1 weist auf der vorderen Stossstange 3 eine Sandstreueinrichtung 4 auf, die einen Sandstreubehälter 5, zumindest einen Streukanal 7, und an dessen Ende eine Sand vor oder hinter ein Rad 2 des Fahrzeuges 1 streuende Streudüse 14 umfasst. Die Streudüse 14 ist durch eine Klappe 15 von unten verschlossen, wobei zwischen der Klappe 15 und der Streudüse 14 ein Dichtungsring 16 eingelegt ist, wie aus den Fig. 2 und 3 ersichtlich. Der aus dem Streusandbehälter 5 vorzugsweise durch Schwerkraft geförderte Sand wird durch die Streudüse 14 bei Bedarf nach Öffnen der Klappe 15 auf die Fahrbahn 27 gestreut, um bei plötzlich auftretendem Glatteis die Lenkfähigkeit bzw. Bremsfähigkeit des Fahrzeuges 1 zu erhalten. Da die Streudüse 14 Schneematsch, Spritzwasser und dem Fahrtwind in besonderem Masse ausgesetzt ist, ist zur Verhinderung des Festfrierens der Klappe 15 eine elektrische Heizeinrichtung 24 vorgesehen, die zumindest die Klappe 15 beheizt. Sie besteht aus Heizdrähten 25, die in die aus Kunststoff bestehende Klappe 15 in dem Anlagebereich 26 eingegossen sind. Weitere Heizdrähte 25 sind im Randbereich der Streudüse 14, die ebenfalls aus Kunststoff besteht, eingegossen. Die Heizdrähte 25 können auch in Rillen eingelegt sein. Es ist weiters auch möglich, einen Heizdraht 25 im Dichtungsring 16 vorzusehen. Die Heizeinrichtung 24 verhindert einerseits das Festfrieren der Klappe 15 an der Streudüse 14 und andererseits das Festfrieren von gegebenenfalls auf der Klappe 15 aufliegendem Streusand, so dass bei Öffnung der Klappe 15 mittels der Betätigungseinrichtung 17-20 ummittelbar Sand auf die Fahrbahn 23 gelangen kann. Die Streudüse 14 mit der Klappe 15 und der Betätigungseinrichtung 17-20 ist in einem Gehäuse 21 untergebracht, das im Bereich der Klappe 15 mit einer Öffnung versehen ist. Diese Öffnung ist von einer Gummischürze 22 od. dgl., die in Fig. 2 teilweise abgerissen ist, zumindest teilweise überdeckt, und stellt einen zusätzlichen Schutz gegen die zu massive Anhäufung von Schnee, Eis oder Matsch an der Aussenseite der Klappe dar, die das Klappengelenk festlegen könnte. Da die Schürze 22 aus nachgiebigem Material besteht, weicht sie der sich öffnenden Klappe 15 aus, so dass der Sand ungehindert austreten kann. Die Klappe 15 ist an zwei abgewinkelten Schwenkhebeln 17 befestigt, die an einer Drehachse 18 befestigt sind. Von der Drehachse 18 steht radial ein Betätigungshebel 19 ab, an dessen Ende ein Hubmagnet 20, der im Gehäuse 21 angeordnet ist, angreift. Für die Betätigung der Klappe 15 kann selbstverständlich auch eine andere Einrichtung, etwa ein Seilzug od. dgl. vorgesehen sein. Die Betätigung mittels Hubmagnet 20 lässt jedoch eine einfache, abnehmbare Montage der Sandstreueinrichtung 4 zu, da sowohl für die Heizung als auch für die Betätigung der Klappe usw. der Anschluss einer elektrischen Leitung, beispielsweise an den Zigarettenanzünder des Kraftfahrzeuges, erforderlich ist. Vorteilhaft wird im Bereich der Sandstreueinrichtung eine Steckdose am Kraftfahrzeug montiert, so dass die Schalter im Inneren fix installiert bleiben können.

Zu der in Fig. 3 gezeigten Ausführung ist die Streudüsenanordnung für ein Zwillingsrad gezeigt, bei der beide beheizten Klappen 15 auf einer gemeinsamen Drehachse 18 angeordnet und durch einen Hubmagneten 20 betätigbar sind.

## Patentansprüche

1. Einrichtung für Kraftfahrzeuge zum Streuen von Sand, mit mindestens einem nachfüllbaren Sandbehälter, von dem ein Streukanal in den Bereich vor das Fahrzeugrad führt und dort in einer Streudüse endet, und mit einer elektrischen Heizeinrichtung im Bereich der Streudüse, dadurch gekennzeichnet, dass die Heizeinrichtung (24) in einer die Streudüse von unten verschliessenden Klappe (15) angeordnet ist.

2. Einrichtung nach Anspruch 1, dadurch gekennzeichnet, dass die Klappe (15) im Anlagebereich (26) an die Streudüse (14) mit einer Dichtung (16) versehen ist, in die ein Heizdraht (25) der Heizeinrichtung (24) eingebettet ist.

## Claims

1. Device for motor vehicles for dispensing sand, comprising at least one refillable sand container from which a dispensing channel extends into the region in front of the wheel of the vehicle and terminates there in a dispensing nozzle, and comprising electric heating means in the region of the dispensing nozzle, characterized in that the heating means (24) is arranged in a flap (15) closing the dispensing nozzle from the bottom.

2. Device according to Claim 1, characterized in that the flap (15) is in the area of contact (26) with the dispensing nozzle (14) provided with a gasket (16) in which a heating wire (25) of the heating means (24) is embedded.

## Revendications

1. Installation d'épandage de sable pour véhicule à moteur, comprenant au moins un réservoir de sable rechargeable d'où part un conduit d'épandage qui se prolonge jusque dans la zone située devant la roue du véhicule pour se terminer par une tuyère d'épandage, comprenant également une installation électrique de chauffage à proximité de la tuyère d'épandage, caractérisée en ce que l'installation de chauffage (24) est située dans un clapet (15) qui ferme la tuyère par-dessous.

2. Installation selon la revendication 1, caractérisée en ce que le clapet (15), dans lequel est inséré un filament chauffant (25) de l'installation de chauffage (24), est muni dans la zone (26) en direction de la tuyère d'épandage (14) d'un joint (16).

Fig. 1

Fig. 2

Fig. 3

0 124 529